Europäisches Patentamt

European Patent Office

Office européen des brevets

(11) Veröffentlichungsnummer: **0 252 107 B1**

(12) **EUROPÄISCHE PATENTSCHRIFT**

(45) Veröffentlichungstag der Patentschrift: **26.09.90**

(21) Anmeldenummer: **87900141.0**

(22) Anmeldetag: **29.12.86**

(86) Internationale Anmeldenummer:
**PCT/EP86/00782**

(87) Internationale Veröffentlichungsnummer:
**WO 87/04108 16.07.87 Gazette 87/15**

(51) Int. Cl.⁵: **B 27 F 1/02,** B 23 Q 7/03, B 23 Q 7/05

(54) ANLAGE ZUM BEARBEITEN PLATTENFÖRMIGER WERKSTÜCKE SOWIE VON LEISTEN ODER KANTHÖLZERN.

(30) Priorität: **11.01.86 DE 3600633**

(43) Veröffentlichungstag der Anmeldung:
**13.01.88 Patentblatt 88/02**

(45) Bekanntmachung des Hinweises auf die Patenterteilung:
**26.09.90 Patentblatt 90/39**

(84) Benannte Vertragsstaaten:
**AT BE CH GB IT LI**

(56) Entgegenhaltungen:
**DE-A-2 539 124**
**DE-A-2 715 377**
**DE-A-2 907 304**
**DE-A-3 022 331**
**DE-A-3 248 117**
**DE-C- 698 668**
**FR-A-2 517 245**
**GB-A-2 118 095**
**US-A-3 068 915**
**US-A-3 194 380**

(73) Patentinhaber: **SBR MASCHINEN-HANDELSGESELLSCHAFT MBH & CO. KG**
**Schnatweg 10**
**D-4900 Herford (DE)**

(72) Erfinder: **ROTTMANN, Manfred**
**Friedrich-Ebert-Strasse 33**
**D-4901 Hiddenhausen (DE)**

(74) Vertreter: **Gramm, Werner, Dipl.-Ing. et al**
**Patentanwälte Gramm + Lins Theodor-Heuss-Strasse 2**
**D-3300 Braunschweig (DE)**

Courier Press, Leamington Spa, England.

## Beschreibung

Die Erfindung betrifft eine Anlage zum Bearbeiten plattenförmiger Werkstücke, z.B. Möbelteile, Türen oder Fenster sowie Leisten oder Kanthölzer, bestehend aus einer ersten und einer zweiten Fördereinheit, die mit lichtem Abstand voneinander angeordnet und mit entgegengesetzten Förderrichtungen angetrieben sind, wobei neben und zwischen diesen Fördereinheiten Bearbeitungseinrichtungen für die Werkstücke angeordnet sind; vor und hinter jeder Fördereinheit ist jeweils ein Einlauf- bzw. Auslaufbereich für die Werkstücke vorgesehen; im Auslaufbereich der ersten Fördereinheit sowie im gegenüberliegenden Einlaufbereich der zweiten Fördereinheit ist je eine quer zur Förderrichtung der Fördereinrichtungen fördernde Rollenbahn angeordnet, die über einen Querförderer miteinander verbunden sind.

Die DE-A-30 22 331 offenbart eine Einrichtung zur Kantenbearbeitung und Verdübelung der Kopfseiten von Platten aus Holz oder daraus gewonnenem Material. Die offenbarte Anlage umfaßt ein erstes Kantenbearbeitungsgerät sowie ein zweites hierzu parallel und mit lichtem Abstand angeordnetes Kantenbearbeitungsgerät, die jeweils eine Fördereinrichtung für die zu bearbeitenden Werkstücke sowie die gewünschten Bearbeitungseinrichtungen aufweisen, die an dem Kantenbearbeitungsgerät selbst unmittelbar neben dessen Fördereinrichtung angeordnet sind. Jedem dieser beiden Kantenbearbeitungsgeräte ist jeweils ein Querförderer vor- und nachgeschaltet. An dem dem ersten Kantenbearbeitungsgerät vorgeschalteten Querförderer ist eine erste Schieb- und Zufuhrvorrichtung vorgesehen, die das auf einem Transporter angeförderte Werkstück in den Einzugsbereich des ersten Kantenbearbeitungsgerätes schiebt. In gleicher Weise ist an dem anderen Querförderer eine zweite Schieb- und Zufuhrvorrichtung vorgesehen, die das hier angeförderte Werkstück in den Einzugsbereich des zweiten Kantenbearbeitungsgerätes schiebt. Die aus dem ersten Kantenbearbeitungsgerät austretenden Werkstücke werden zuerst von Riemen aufgenommen, während die aus dem zweiten Kantenbearbeitungsgerät austretenden Werkstücke von Riemen übernommen werden. Demgemäß umfaßt jeder der beiden parallel und im Abstand zueinander verlaufenden Förderwege drei separate Fördereinrichtungen, nämlich eine Schieb- und Zufuhrvorrichtung, den Förderer des Kantenbearbeitungsgerätes und den nachgeschalteten Riemenförderer.

Eine vergleichbare Anlage offenbart auch die US-A-3 068 915.

Die Bearbeitungseinrichtungen umfassen üblicherweise Sägen, Fräsen, Kantenanleimer o.dergl.. Zum Bearbeiten der Kanten eines Werkstückes ist eine aufwendige Manipulation dieses Werkstückes erforderlich.

Der Erfindung liegt die Aufgabe zugrunde, die eingangs erläuterte Anlage hinsichtlich der Manipulation der Werkstücke zu verbessern.

Diese Aufgabe wird erfindungsgemäß durch folgende Merkmale gelöst:

d) Jede Fördereinheit umfaßt eine kontinuierlich angetriebene, die Werkstücke tragende untere endlose Kettenbahn sowie eine ebenfalls kontinuierlich angetriebene, die Werkstücke von oben beaufschlagende obere endlose Kettenbahn;

e) die unteren Kettenbahnen sind an ihren beiden Enden über die jeweils zugeordnete obere Kettenbahn hinaus verlängert und bilden hier den genannten Einlauf- bzw. Auslauf-Bereich;

f) die genannte Rollenbahn ist jeweils über die zugeordnete untere Kettenbahn anhebbar sowie zwischen diese absenkbar;

g) die genannten Bearbeitungseinrichtungen sind in einer zwischen den beiden Fördereinheiten angeordneten Bearbeitungszelle zusammengefaßt.

Dabei ist es vorteilhaft, wenn im Einlaufbereich der ersten Fördereinheit sowie im Auslaufbereich der zweiten Fördereinheit je eine quer zur Förderrichtung der Fördereinheit fördernde Rollenbahn o.dgl. angeordnet ist, die über die untere Kettenbahn anhebbar sowie zwischen die untere Kettenbahn absenkbar ist.

Anzahl und Abstand der unteren Kettenbahnen entsprechen den zu bearbeitenden Werkstückabmessungen. Zur Werkstückübernahme sind die unteren Kettenbahnen über die obere Kettenbahn hinaus verlängert. Die obere Kettenbahn kann jeweils als Doppelkettenbahn ausgebildet sein, deren Abstand durch die geringste Werkstückbreite festgelegt ist. Außerdem können die oberen Kettenbahnen mit einer Schallschutzabdeckung versehen sein.

Um einen kontinuierlichen Werkstücktransport sicherzustellen, ist es vorteilhaft, wenn die untere und obere Kettenbahn jeder Fördereinheit jeweils über Gleichstromgetriebemotoren synchron angetrieben sind.

Zur Positionierung der Werkstücke beim Einlauf in die zweite Fördereinheit ist es vorteilhaft, wenn im Einlaufbereich der zweiten Fördereinheit zumindest ein in Förderrichtung des Querförderers verstellbares Positionieranschlaglineal für die Werkstücke angeordnet ist. Bei großen Längenunterschieden zwischen den zu bearbeitenden Werkstücken ist es vorteilhaft, wenn mehrere derartige Positionieranschlaglineale vorgesehen sind.

Die anheb- und absenkbaren Rollenbahnen können auch durch andere gleichwirkende Fördereinrichtungen ersetzt werden. Die taktweise Steuerung der Hub- bzw. Absenkbewegungen der Rollenbahnen erfolgt ebenfalls aus der Bearbeitungszelle heraus, die von einem Lärmschutzhaus umschlossen sein kann und neben allen erforderlichen Bearbeitungseinrichtungen beider Fördereinheiten auch noch die Steuerungen für die Rollenbahnen sowie das Positionieranschlaglineal und für die Streckensteuerung umfaßt.

Das erfindungsgemäße Bearbeitungszentrum ist für Längs- und Querbearbeitung geeignet, wobei die Werkstücke, die zuerst in Längsrichtung die beiden Fördereinheiten durchlaufen, anschließend noch einmal in Querrichtung in die Anlage eingeführt werden, soweit alle vier Kanten des plattenförmigen Werkstückes bearbeitet werden müssen. Die Fertigung ist längenunabhängig und läßt sich kontinuierlich durchführen, und zwar bei Kleinserienfertigung als auch bei Einzelfertigung. Umstellzeiten bei Längenänderungen entfallen. Eine montagebezogene Fertigung (Kommissionsfertigung) ist möglich. Für die Bedienung der gesamten Anlage ist nur eine Person erforderlich. Durch die Anordnung des vorstehend beschriebenen Lärmschutzhauses, das mit einer Zentralabsaugung versehen werden kann, ergibt sich ein hoher Schutz für die umliegenden Arbeitsplätze.

Weitere Merkmale der Erfindung sind Gegenstand der Unteransprüche und werden zusammen mit weiteren Vorteilen der Erfindung anhand eines Ausführungsbeispiels näher erläutert.

In der Zeichnung ist eine als Beispiel dienende Ausführungsform der Erfindung schematisch dargestellt. Es zeigen:

Figur 1: eine Bearbeitungsanlage in Draufsicht;

Figur 2: die Anlage gemäß Figur 1 in Seitenansicht.

Figur 3: die Anlage gemäß den Figuren 1 und 2 in Stirnansicht und

Figur 4: der Durchlauf einzelner Werkstücke zur Längs- oder Querbearbeitung.

Die dargestellte Anlage umfaßt eine erste Fördereinheit 1 und eine zweite Fördereinheit 2, die parallel nebeneinander und mit lichtem Abstand voneinander angeordnet sind und entgegengesetzte Förderrichtungen A, B aufweisen. Jede Fördereinheit 1, 2 umfaßt untere Kettenbahnen 3, denen obere Kettenbahnen 4 zugeordnet sind. Anzahl und Abstand der unteren Kettenbahnen 3 entsprechen den zu bearbeitenden Werkstückabmessungen. Die unteren Kettenbahnen 3 sind nicht verstellbar. Die oberen Kettenbahnen 4 sind jeweils als Doppelkettenbahn ausgebildet, deren Abstand durch die kleinste Werkstückbreite festgelegt ist. Die unteren und oberen Kettenbahnen 3, 4 sind jeweils über Gleichstromgetriebemotoren 5 synchron angetrieben. Zum gemeinsamen Antrieb der unteren Kettenbahnen 3 ist jeweils eine Vorschubwelle 6 vorgesehen.

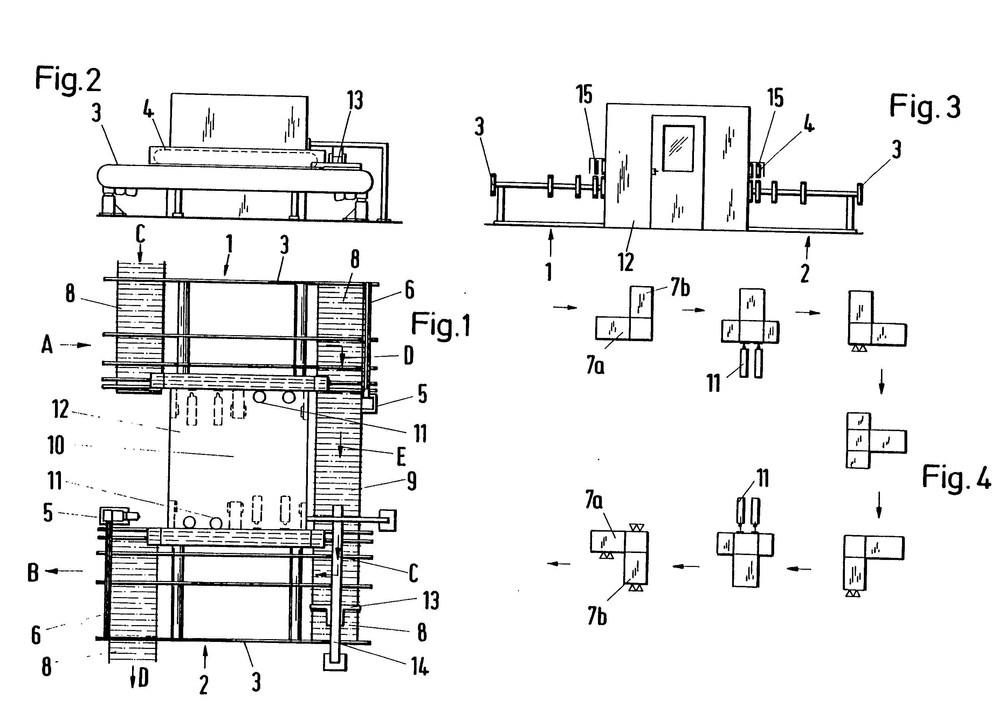

Die unteren Kettenbahnen 3 sind an ihren beiden Enden jeweils über die zugeordneten oberen Kettenbahnen 4 hinaus verlängert und bilden hier einen Einlaufbereich C bzw. einen Auslaufbereich D für die in Figur 4 dargestellten Werkstücke 7. In den vier Einlauf- und Auslaufbereichen C, D ist jeweils eine quer zur Förderrichtung A bzw. B fördernde Rollenbahn 8 angeordnet, die über die unteren Kettenbahnen 3 anhebbar sowie zwischen diese unteren Ketten absenkbar ist. Die im Auslaufbereich D der ersten Fördereinheit 1 liegende Rollenbahn 8 ist mit der gegenüberliegenden Rollenbahn im Einlaufbereich C der zweiten Fördereinheit 2 über einen Querförderer 9 verbunden, dessen Förderrichtung mit dem Pfeil E gekennzeichnet ist.

Zwischen den beiden Fördereinheiten 1, 2 ist eine Bearbeitungszelle 10 angeordnet, die alle Bearbeitungseinrichtungen 11, wie Sägen, Fräsen, Kantenanleimer u. dgl., von beiden Fördereinheiten 1, 2 umfaßt. Die Bearbeitungszelle 10 ist von einem Lärmschutzhaus 12 umschlossen.

Im Einlaufbereich C der zweiten Fördereinheit 2 ist ein in Förderrichtung E des Querförderers 9 verstellbares Positionieranschlaglineal 13 für die einlaufenden Werkstücke an einem Führungsträger 14 oberhalb des Werkstücktransportes angeordnet. Das Positionieranschlaglineal 13 ist über eine nicht dargestellte Kugelrollspindel sowie einen Gleichstromgetriebemotor positionierbar zur Bestimmung der vorgegebenen Werkstücklänge. Bei Bearbeitung von Werkstücken mit großen Längenunterschieden kann die Anordnung mehrerer Positionieranschlaglineale zweckmäßig sein.

Die unteren Kettenbahnen 3 sind mit nicht dargestellten Mitnehmern ausgerüstet, während die oberen Kettenbahnen 4 mit einer Schallschutzabdeckung 15 versehen sind.

Figur 4 läßt den Durchlauf der Werkstücke 7 erkennen, wobei mit 7a ein in Längsrichtung gefördertes und mit 7b ein quer gefördertes Werkstück bezeichnet sind. Dabei sind die jeweils bearbeiteten Werkstückkanten gekennzeichnet. Es ist erkennbar, daß die Werkstücke 7 nacheinander rechts- und linksseitig bearbeitet werden, wobei die Bearbeitung längenunabhängig und kontinuierlich durchgeführt werden kann. Die zentrale Bearbeitungszelle 10 kann für eine Ein-Mann-Bedienung ausgelegt sein und eine Zentralabsaugung aufweisen. Durch die Anordnung des Lärmschutzhauses 12 kann die Lärmentwicklung unter 85 dB (A) gehalten werden. Die Anlage ist erweiterungsfähig zum kombinierten Bearbeitungszentrum für getrennte Längs- und Querbearbeitung in einer Fertigungsstraße.

Die zu bearbeitenden Werkstücke 7 werden im Einlaufbereich C der ersten Fördereinheit 1 auf die angehobene Rollenbahn 8 in Richtung des Pfeiles aufgegeben. Durch Absenken der Rollenbahn 8 erfolgt die Übergabe der Werkstücke auf die untere Kettenbahn 3, die mit ihren Mitnehmern die Werkstücke in den Einzugsbereich der oberen Kettenbahnen 4 fördert, die die Werkstücke ausschließlich in dem Bereich unmittelbar neben den Bearbeitungseinrichtungen 11 von oben andrückt. Das nach der ersten Bearbeitung im Auslaufbereich D der ersten Fördereinheit 1 ankommende Werkstück wird durch Anheben der dort vorgesehenen Rollenbahn 8 von dieser übernommen und auf den Querförderer 9 abgegeben, der das Werkstück in den Einlaufbereich C der zweiten Fördereinheit 2 bringt, wo das Werkstück nach Absenken der entsprechenden Rollenbahn 8 wiederum von den unteren Kettenbahnen 3 übernommen wird. Das Werkstück durchläuft dann in der Förderrichtung B die zweite Fördereinheit und wird an der Kante bearbeitet, die der zuerst bearbeiteten Kante gegenüberliegt. Zur Positionierung der Werkstücke in der zweiten Fördereinheit 2 wird das Positionieranschlaglineal 13 in die erforderliche Stellung gefahren. Das vom Querförderer 9 angeförderte Werkstück läuft dann gegen dieses Positionieranschlaglineal 13 an.

**Patentansprüche**

1. Anlage zum Bearbeiten plattenförmiger Werkstücke (7), z.B. Möbelteile, Türen oder Fenster sowie von Leisten oder Kanthölzern, bestehend aus

a) einer ersten und einer zweiten Fördereinheit (1, 2), die mit lichtem Abstand voneinander angeordnet und mit entgegengesetzten Förderrichtungen (A, B) angetrieben sind, wobei neben und zwischen diesen Fördereinheiten (1, 2) Bearbeitungseinrichtungen (11) für die Werkstücke (7) angeordnet sind;

b) vor und hinter jeder Fördereinheit (1, 2) ist jeweils ein Einlauf- (C) bzw. Auslauf-Bereich (D) für die Werkstücke (7) vorgesehen;

c) im Auslaufbereich (D) der ersten Fördereinheit (1) sowie im gegenüberliegenden Einlaufbereich (C) der zweiten Fördereinheit (2) ist je eine quer zur Förderrichtung (A, B) der Fördereinrichtungen fördernde Rollenbahn (8) angeordnet, die über einen Querförderer (9) miteinander verbunden sind;

gekennzeichnet durch folgende Merkmale:

d) jede Fördereinheit (1, 2) umfaßt eine kontinuierlich angetriebene, die Werkstücke (7) tragende untere endlose Kettenbahn (3) sowie eine ebenfalls kontinuierlich angetriebene, die Werkstücke (7) von oben beaufschlagende obere endlose Kettenbahn (4);

e) die unteren Kettenbahnen (3) sind an ihren beiden Enden über die jeweils zugeordnete obere Kettenbahn (4) hinaus verlängert und bilden hier den genannten Einlauf- (C) bzw. Auslauf-Bereich (D);

f) die genannte Rollenbahn (8) ist jeweils über die zugeordnete untere Kettenbahn (3) anhebbar sowie zwischen diese absenkbar;

g) die genannten Bearbeitungseinrichtungen (11) sind in einer zwischen den beiden Fördereinheiten (1, 2) angeordneten Bearbeitungszelle (10) zusammengefaßt.

2. Anlage nach Anspruch 1, dadurch gekennzeichnet, daß im Einlaufbereich (C) der ersten Fördereinheit (1) sowie im Auslaufbereich (D) der zweiten Fördereinheit (2) je eine quer zur Förderrichtung (A, B) der Fördereinheiten (1, 2) fördernde Rollenbahn (8) o. dgl. angeordnet ist, die über die untere Kettenbahn (3) anhebbar sowie zwischen die untere Kettenbahn (3) absenkbar ist.

3. Anlage nach Anspruch 1 oder 2, dadurch gekennzeichnet, daß die untere Kettenbahn (3) mit Mitnehmern ausgerüstet ist.

4. Anlage nach Anspruch 1, 2 oder 3 dadurch gekennzeichnet, daß die obere Kettenbahn (4) jeweils als Doppelkettenbahn ausgebildet ist.

5. Anlage nach einem der vorhergehenden Ansprüche, dadurch gekennzeichnet, daß die untere und obere Kettenbahn (3, 4) jeder Fördereinheit (1, 2) jeweils über Gleichstromgetriebemotoren (5) synchron angetrieben sind.

6. Anlage nach einem der vorhergehenden Ansprüche, dadurch gekennzeichnet, daß im Einlaufbereich (C) der zweiten Fördereinheit (2) zumindest ein in Förderrichtung (E) des Querförderers (9) verstellbares positionieranschlaglineal (13) für die Werkstücke (7) angeordnet ist.

7. Anlage nach Anspruch 6, dadurch gekennzeichnet, daß das Positionieranschlaglineal (13) oberhalb des Werkstücktransportes an einem Führungsträger (14) angeordnet und über einen Gleichstromgetriebemotor positionierbar ist.

8. Anlage nach einem der vorhergehenden Ansprüche, dadurch gekennzeichnet, daß die Bearbeitungszelle (10) von einem Lärmschutzhaus (12) umschlossen ist.

9. Anlage nach einem der vorhergehenden Ansprüche, dadurch gekennzeichnet, daß die oberen Kettenbahnen (4) mit einer Schallschutzabdeckung (15) versehen sind.

**Revendications**

1. Installation pour usiner des pièces en forme de plaques (7), par exemple des parties de meuble, des portes ou des fenêtres ainsi que des lattes ou du bois équarri, comprenant:

a) une première et une seconde unité de transport séparées l'une de l'autre par un écartement et entraînées dans des sens de transport opposés (A, B), des dispositifs d'usinage (11) pour les pièces (7) étant installés à côté de ces unités de transport (1, 2) et entre celles-ci;

b) devant et derrière chaque unité de transport sont prévues, respectivement, une zone d'entrée (C) et une zone de sortie (D) pour les pièces (7);

c) dans la zone de sortie (D) de la première unité de transport (1) et dans la zone d'entrée opposée (C) de la deuxième unité de transport (2), sont disposés respectivement des transporteurs à rouleaux se déplaçant transversalement aux sens de déplacement (A, B) des unités de transport, ces transporteurs à rouleaux (8) étant reliés l'un à l'autre par un transporteur transversal (9), caractérisee en ce que:

d) chaque unité de transport (1, 2) comprend un transporteur à chaîne sans fin inférieur (3) entraîné de manière continue et transportant les pièces (7), et un transporteur à chaîne sans fin supérieur (4) également entraîné de manière continue, attaquant les pièces (7) du dessus;

e) les transporteurs à chaîne inférieurs (3) se prolongent à leurs deux extrémités au-delà du transporteur à chaîne supérieur (4) associé et forment à ces endroits la zone précitée d'entrée (C) ou de sortie (D);

f) le transporteur à rouleaux (8) précité peut être élevé au-dessus du transporteur à chaîne inférieur (3) associé ou être abaissé entre les chaînes de celui-ci;

g) les dispositifs d'usinage (11) précités sont regroupés dans une cellule d'usinage (10) disposée entre les deux unités de transport (1, 2).

2. Installation suivant la revendication 1, caractérisée en ce que, dans la zone d'entrée (C) de la première unité de transport (1) et dans la zone de sortie (D) de la deuxième unité de transport (2) est chaque fois prévu un transporteur à rouleaux (8) ou analogue se déplaçant transversalement aux sens de transport (A, B) des unités de transport (1, 2), qui peut être élevé au-dessus du transporteur à chaîne inférieur (3) et abaissé entre les chaînes de celui-ci.

3. Installation suivant la revendication 1 ou 2, caractérisée en ce que le transporteur à chaîne inférieur (3) est équipé d'organes entraîneurs.

4. Installation suivant la revendication 1, 2 ou 3, caractérisée en ce que le transporteur à chaîne supérieur (4) se présente à chaque fois sous la forme d'un double transporteur à chaîne.

5. Installation suivant l'une quelconque des revendications précédentes, caractérisée en ce que les transporteurs à chaîne inférieurs et supérieurs (3, 4) de chaque unité de transport (1, 2) sont entraînés de manière synchrone, chacun par l'intermédiaire d'un moteur-réducteur à courant continu (5).

6. Installation suivant l'une quelconque des revendications précédentes, caractérisée en ce que dans la zone d'entrée (C) de la deuxième unité de transport (2) est prévue au moins une règle de butée de positionnement (13) pour les pièces (7), qui peut être déplacée dans le sens de transport (E) du transporteur transversal (9).

7. Installation suivant la revendication 6, caractérisée en ce que la règle de butée de positionnement (13) est montée au-dessus du transporteur de pièces sur un support de guidage (14) et peut être positionnée par l'intermédiaire d'un moteur-réducteur à courant continu.

8. Installation suivant l'une quelconque des revendications précédentes, caractérisée en ce que la cellule d'usinage (10) est entourée par une enceinte insonorisée (12).

9. Installation suivant l'une quelconque des revendications précédentes, caractérisée en ce que les transporteurs à chaîne supérieurs (4) sont pourvus d'un capot insonorisant (15).

**Claims**

1. Device for machining plate-like work-pieces (7), for example furniture components, doors or windows as well as battens or square timbers, consisting of

a) a first and a second conveyor unit (1, 2), which are arranged with a clearance between them and are driven in opposite conveying directions (A, B), machining devices (11) for the work-pieces (7) being located beside and between these conveyor units (1, 2);

b) an inlet (C) or outlet region (D) for the work-pieces (7) is respectively provided in front of and behind each conveyor unit (1, 2);

c) located respectively in the outlet region (D) of the first conveyor unit (1) as well as in the opposite inlet region (C) of the second conveyor unit (2) is a roller track (8) conveying transversely to the conveying direction (A, B) of the conveyor devices, which roller tracks are connected to each other by a transverse conveyor (9);

characterised by the following features:

d) each conveyor unit (1, 2) comprises a continuously driven, lower endless chain belt (3) supporting the work-pieces (7) as well as a likewise continuously driven, upper endless chain belt (4) acting on the work-pieces (7) from above;

e) the lower chain belts (3) are extended at their two ends beyond the respectively associated upper chain belt (4) and at this point form the said inlet (C) or outlet region (D);

f) the said roller track (8) is able to be raised above the associated lower chain belt (3) and to be lowered between the latter;

g) the said machining devices (11) are combined in a machining cell (10) located between the two conveyor units (1, 2).

2. Device according to Claim 1, characterised in that located respectively in the inlet region (C) of the first conveyor unit (1) as well as in the outlet region (D) of the second conveyor unit (2) is a roller track (8) or the like conveying transversely to the conveying direction (A, B) of the conveyor units (1, 2), which roller track can be raised above the lower chain belt (3) as well as lowered between the lower chain belt (3).

3. Device according to Claim 1 or 2 characterised in that the lower chain belt (3) is equipped with entrainment members.

4. Device according to Claim 1, 2 or 3, characterised in that the upper chain belt (4) is constructed in each case as a double chain belt.

5. Device according to one of the preceding Claims, characterised in that the lower and upper chain belt (3, 4) of each conveyor unit (1, 2) are respectively driven in synchronism by way of direct current geared motors (5).

6. Device according to one of the preceding Claims, characterised in that located in the inlet region (C) of the second conveyor unit (2) is at least one positioning stop guide (13) for the work-pieces (7), which guide can be adjusted in the conveying direction (E) of the transverse conveyor (9).

7. Device according to Claim 6, characterised in that the positioning stop guide (13) is located above the work-piece transportation on a guide support (14) and can be positioned by way of a direct current geared motor.

8. Device according to one of the preceding Claims, characterised in that the machining cell (10) is enclosed by a noise protection house (12).

9. Device according to one of the preceding Claims, characterised in that the upper chain belts (4) are provided with a sound-insulation cover (15).

Fig.2

Fig. 3

Fig.1

EP 0 252 107 B1

Fig. 4